**Europäisches Patentamt**

**European Patent Office**

**Office européen des brevets**

(19)

(11) Numéro de publication: **0 016 677**

**A1**

(12) **DEMANDE DE BREVET EUROPEEN**

(21) Numéro de dépôt: **80400298.8**

(22) Date de dépôt: **04.03.80**

(51) Int. Cl.³: **H 04 J 3/00**

(30) Priorité: **16.03.79 FR 7906726**

(43) Date de publication de la demande:
**01.10.80 Bulletin 80/20**

(84) Etats Contractants Désignés:
**BE DE GB IT NL SE**

(71) Demandeur: **LE MATERIEL TELEPHONIQUE THOMSON-CSF**
**146 Boulevard de Valmy**
**F-92707 Colombes Cedex(FR)**

(72) Inventeur: **Le Cardonnel, Gérard Marcel**
**"THOMSON-CSF" - SCPI 173 Boulevard Haussmann**
**F-75360 Paris Cedex 08(FR)**

(74) Mandataire: **Chaverneff, Vladimir et al,**
**"THOMSON-CSF" - SCPI 173 Boulevard Haussmann**
**F-75360 Paris Cedex 08(FR)**

(54) **Agencement de transmission numérique.**

(57) Agencement de transmission numérique de signaux modulés par impulsions codées multiplexées dans le temps, destiné à mettre en liaison des organes (1, 2) à important débit potentiel de données par l'intermédiaire de lignes (5) à faible débit.

L'agencement comporte un transmultiplexeur d'émission (6) pour chaque organe producteur de données (1) et un transmultiplexeur de réception (7) par organe récepteur (2), ces transmultiplexeurs assurent les modifications des signaux pour permettre leur transmission et leur réception.

L'invention s'applique notamment à la transmission de signaux numériques par l'intermédiaire des liaisons téléphoniques existantes.

./...

Croydon Printing Company Ltd.

EP 0 016 677 A1

Fig.1

1

## AGENCEMENT DE TRANSMISSION NUMERIQUE

La présente invention concerne un agencement de transmission numérique de signaux modulés par impulsions codées multiplexées dans le temps et plus particulièrement un agencement destiné à mettre en liaison des organes à important débit potentiel de données par l'intermédiaire de lignes à faible débit.

Il est bien connu de relier des organes à fort débit de données au moyen de liaisons capables de supporter un fort débit, ainsi par exemple il est possible de transmettre un certain nombre de communications téléphoniques simultanées sur un même support à fort débit grâce aux techniques de multiplexage temporel associées aux techniques de codage numérique.

Toutefois les réseaux de télécommunications existants mettent en œuvre un grand nombre de liaisons à faible débit dont le remplacement ne peut être que progressif en raison des frais impliqués et du temps que cela nécessite.

La présente invention propose donc un agencement qui permette de relier deux équipements à fort débit via une pluralité de liaisons dont la somme des débits correspond aux débits de ces deux équipements.

Ceci doit notamment permettre d'étendre la numérisation des réseaux de télécommunications existants par l'utilisation des liaisons existantes à faible débit, telles que les lignes réalisées en câbles téléphoniques multipaires.

Etant donné que les organes que l'on désire relier devraient normalement être connectés à des équipements de transmission à fort débit et qu'ils doivent pouvoir l'être dans le futur, il est essentiel que l'agencement de transmission selon l'invention soit capable de se comporter comme ces équipements de transmissions à fort débit au regard des organes qu'il dessert

C'est pourquoi l'agencement de transmission numérique selon l'invention est destiné à être relié à un terminal MIC de la même manière qu'une jonction temporelle MIC et qu'il est donc destiné à réagir comme une telle jonction vis-à-vis de l'organe qu'il dessert.

Toutefois un tel agencement se différencie d'une jonction MIC par le fait que la multiplicité de liaisons employées entraîne la
mise en place d'un procédé permettant de coder des informations de
synchronisation et de signalisation propres aux liaisons employées
et d'un système capable de retraduire ces informations et en particulier de produire les signaux d'horloge nécessaires à la reconstitution des informations originales après transmission.

La présente invention propose donc un agencement de transmission numérique destiné à mettre en liaison deux organes à fort débit
de données par l'intermédiaire de liaisons filaires ayant un débit
plus faible que le débit à transmettre, lorsque ces données sont
fournies sous forme de signaux impulsionnels codés qui sont multiplexés dans le temps.

Selon une caractéristique de l'invention cet agencement est
caractérisé en ce qu'il comporte pour chaque sens de transmission
exploité au moins un transmultiplexeur d'émission, par organe producteur de données, connecté en sortie du terminal d'émission à
grand débit de cet organe et apte à modifier le multiplexage de
rang M des signaux, émis par ce terminal d'émission à destination
d'une liaison unique, pour les répartir sur N liaisons à plus faible
débit, sachant que M et N sont des nombres entiers tels que $1 < N < M$
et une mémoire de trame, reliée à la sortie à fort débit de données
du terminal d'émission à desservir, apte à mémoriser les échantillons d'une trame de signaux MIC avant un multiplexeur de rang M.

Les objets et caractéristiques de la présente invention apparaîtront plus clairement à la lecture de la description suivante
d'exemples de réalisation, ladite description étant faite en relation avec les dessins ci-annexés dans lesquels :
- la figure 1 présente le schéma de principe d'un agencement de
  transmission numérique selon l'invention ;
- la figure 2 présente le schéma d'un exemple de réalisation d'agencement de transmission numérique selon l'invention ;
- les figures 3a à 3f présentent le diagramme du fonctionnement en
  émission d'un agencement selon l'invention ;
- les figures 4, 5a et 5b présentent les diagrammes de fonctionnement de l'agencement en réception.

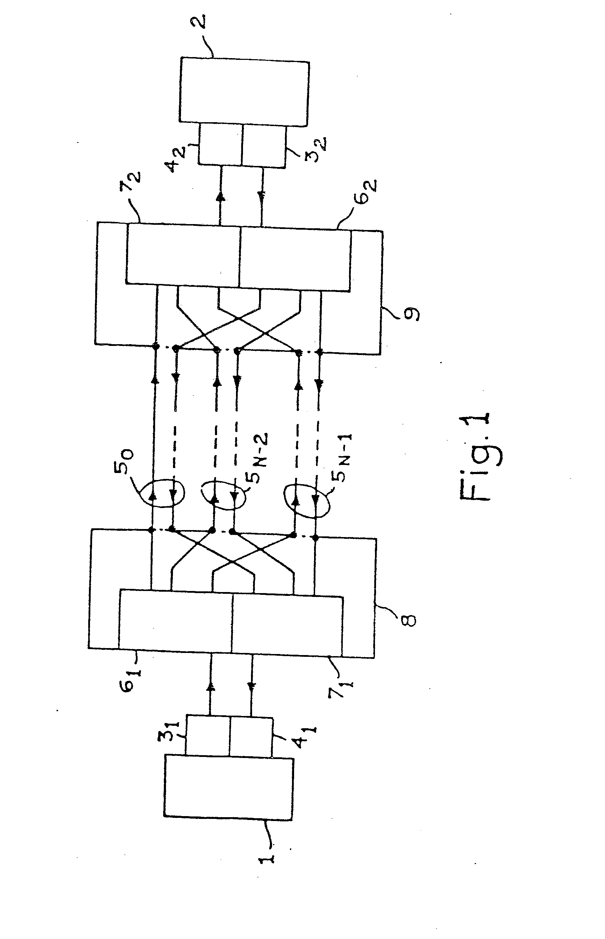

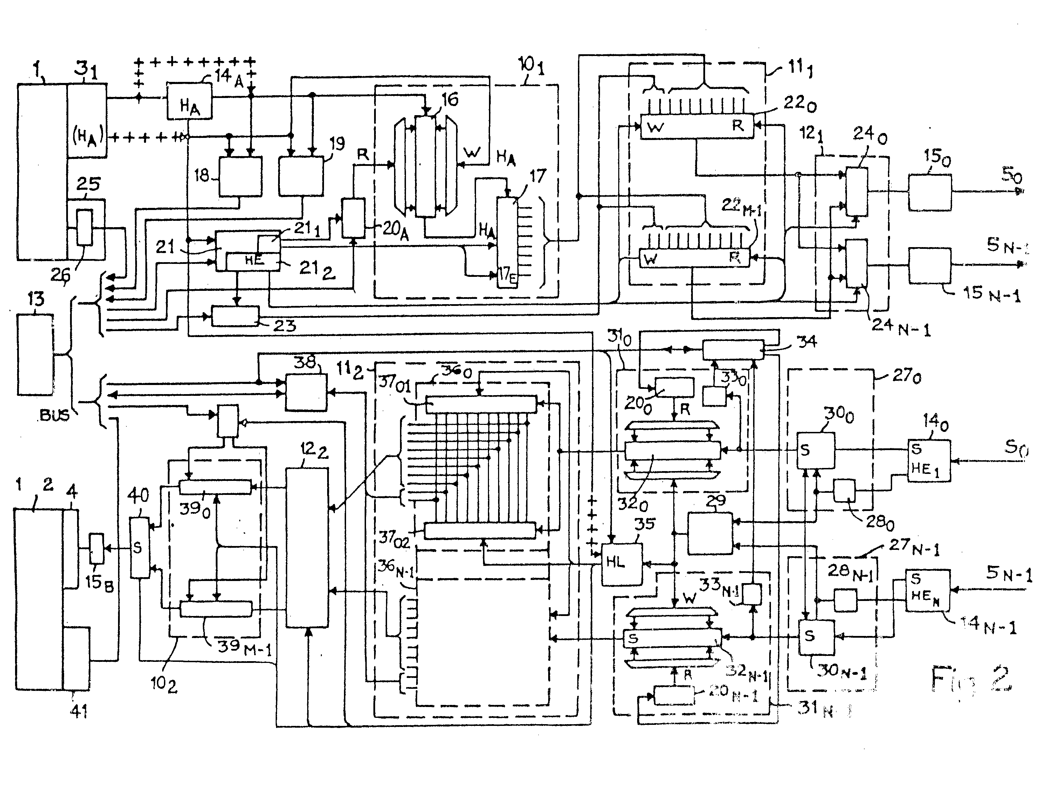

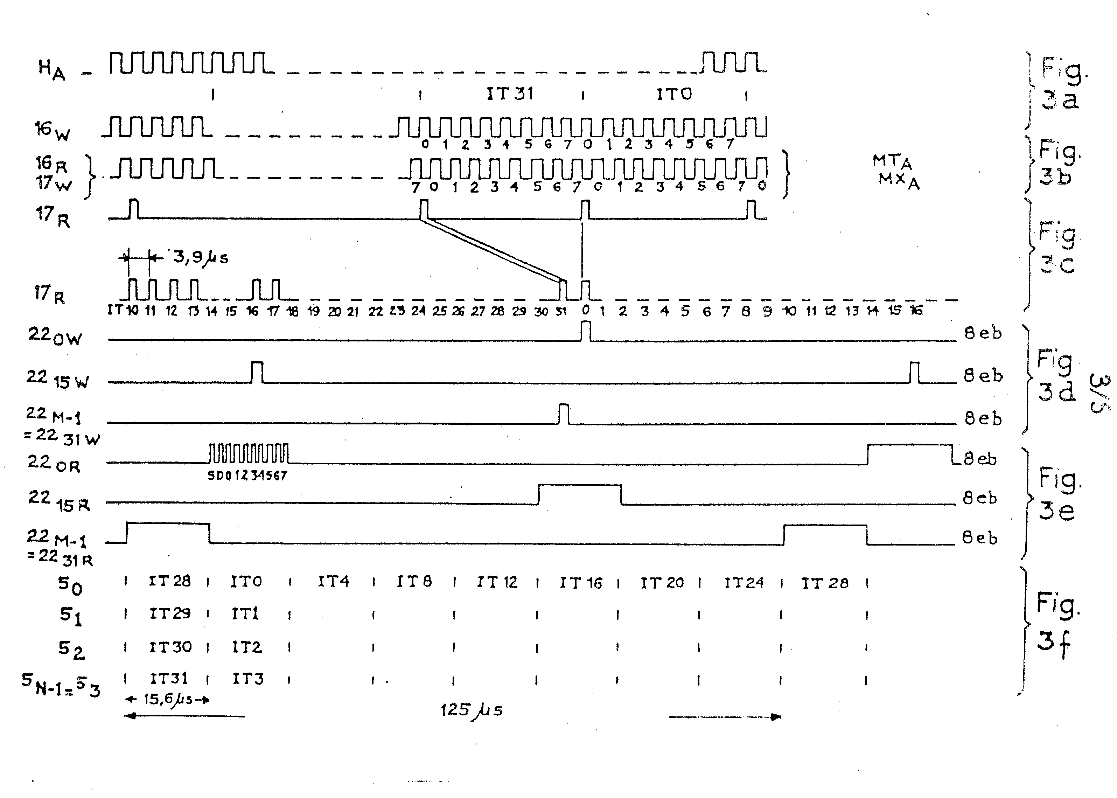

L'agencement de transmission symbolisé figure 1 est destiné à

3

mettre en liaison les terminaux d'émission 3 tels $3_1$ et $3_2$ et de réception 4 tels $4_1$ et $4_2$ de deux organes 1 et 2.

Les organes 1 et 2 sont censés produire un fort/de données numériques, ce sont par exemple l'un un central téléphonique et l'autre un concentrateur, les terminaux d'émission 3 et de réception 4 qui les desservent sont prévus pour écouler ce fort trafic, ce sont par exemple des équipements multiplex primaires MIC.

Le débit de données de ces terminaux est très important et exige normalement l'emploi de liaisons performantes telles que des liaisons dont le débit unidirectionnel est de 2048 Kbit/s.

L'invention prévoit de répartir le trafic de données échangées entre deux organes 1 et 2 à fort débit sur N liaisons 5 à faible débit, telles que par exemple des lignes téléphoniques usuelles.

En ce but l'invention prévoit d'insérer un transmultiplexeur d'émission 6 entre chaque terminal d'émission 3 d'organe et les liaisons 5 employées et un transmultiplexeur de réception 7 entre ces liaisons 5 et le terminal de réception 4 d'organe qu'elles desservent, tels $6_1$ entre $3_1$ et les liaisons 5 et $7_1$ entre ces liaisons et $4_1$. Un transmultiplexeur d'émission tel que $6_1$ reçoit les données à transmettre sous forme prévue pour une transmission sur une liaison à fort débit et les agence de manière à assurer leur transmission continue en parallèle sur plusieurs liaisons à faible débit. Un transmultiplexeur de réception tel que $7_2$ assure la conversion inverse de manière à fournir au terminal de réception $4_2$ les données sous une forme identique à celle sous laquelle il les recevrait d'une liaison à grand débit.

De manière classique les données numériques échangées entre des organes tels que 1 et 2 correspondent à des informations qui sont codées et groupées en mots ou blocs dont certains ne peuvent être scindés sous peine de perdre ou de déformer l'information qu'ils contiennent, tels sont par exemple les échantillons de parole des systèmes de commutation temporelle.

Ceci restreint donc les possibilités de répartition des données sur N liaisons 5 lorsqu'elles sont reçues d'une source unique, telle que par exemple le terminal d'émission $3_1$.

De plus, ces données numériques échangées entre organes 1 et 2 sont les éléments constituants d'informations différentes multiplexées dans le temps numérique des terminaux d'échange d'aff
d'assurer une utilisation optimale des liaisons de transmission,
ceci permet de desservir plusieurs sources à relativement faibles
débits au moyen d'une liaison à débit plus important. Ainsi par
exemple une jonction de type connu permet de desservir trente sources
distinctes.

Bien entendu un tel multiplexage d'informations dans le temps
impose des contraintes spécifique et en particulier l'emploi d'informations auxiliaires, telles que des informations de synchronisation et de signalisation pour permettre de reconstituer les informations à transmettre, après leur transmission.

L'emploi de N liaisons 5 à faible débit au lieu d'une liaison
à fort débit entraîne donc la nécessité de modifier le flot de données reçues pour permettre une transmission continue sans perte
d'informations et une reconstitution du flot après transmission.

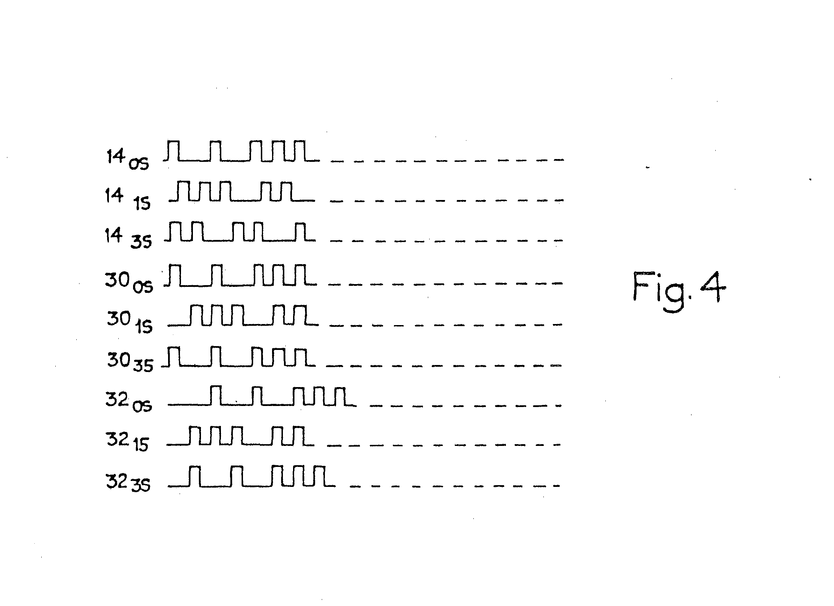

La figure 2 représente un agencement numérique de transmission
destiné à remplacer une jonction MIC par une pluralité de lignes
téléphoniques classiques. Cet agencement se connecte donc aux terminaux d'émission et de réception des organes 1 et 2 de la même
manière que le ferait une jonction MIC.

On rappellera brièvement ici les caractéristiques d'une jonction MIC classique, étant entendu que l'invention est applicable à
d'autres jonctions de même genre.

La jonction MIC à laquelle il sera fait référence ci-dessous,
possède les caractéristiques rappelées par l'avis G732 du CCITT et
permet la transmission de données numériques codées par l'intermédiaire de multitrames successives comportant chacune seize trames
composées chacune de trente-deux intervalles de temps de voie réservés chacun à huit éléments binaires, les huit éléments binaires d'un
intervalle de temps de voie constituent soit un mot soit un échantillon de parole. Les informations auxiliaires nécessaires pour la
transmission et la reconstitution des informations à transmettre
sont :
- un code de verrouillage de trame prévu dans les sept derniers emplacements de bits de l'intervalle de temps de voie 0 d'une trame sur deux :

- un code de verrouillage de multitrame prévu dans les quatre premiers emplacements de bits de l'intervalle de temps de voie 16 de la trame 0 ;

- une signalisation, de type voie par voie ou canal sémaphore, prévue dans l'intervalle de temps de voie 16 des quinze trames autres que la trame 0 ;

- une alarme prévue au moyen de l'emplacement de bit 3 de l'intervalle de temps de voie 0 des trames impaires et de l'emplacement de bit 6 de la voie 16 de la trame 0.

L'agencement selon l'invention met essentiellement en œuvre pour chaque sens de transmission :

- une mémoire de trame 10, apte à recueillir les éléments binaires des échantillons transmis au cours d'une trame ;

- un ensemble 11 de registres tampons 22 pour stocker temporairement les échantillons reçus et les informations auxiliaires qui les accompagneront en cours de transmission ;

- une unité de commutation 12, chargée d'assurer la commutation des échantillons en fonction du nombre de liaisons utilisées en aval ;

- un ensemble de circuits auxiliaires pour assurer une transmission contrôlée et à jet continu, des données reçues ;

- un microcalculateur de gestion 13.

L'ordre des organes 10, 11 et 12 est fonction du transmultiplexage, dans l'exemple présenté ici ils forment une chaîne 10-11-12 lorsque les données sont démultiplexées pour être transmises sur les liaisons 5 et ils forment une chaîne 11-12-10, lorsque les données sont multiplexées à nouveau après transmission.

Selon une pratique classique, il est prévu d'insérer des transcodeurs aux extrémités des chaînes précitées, ces transcodeurs permettent d'obtenir un code de commutation qui soit différent de celui qui est prévu pour la transmission, sachant que les contraintes sont différentes pour ces deux opérations.

A titre d'exemple les signaux émis par le terminal 3, sont sous forme normalisée HDB3 et doivent être transcodés sous forme NRZ en vue des transmultiplexages à effectuer dans l'agencement selon l'invention.

6

Ce transcodage s'effectue à l'aide de circuits classiques, il est symbolisé figure 2 par les transcodeurs $14_A$, $14_0$ à $14_{N-1}$, $15_B$, $15_0$ à $15_{N-1}$ étant entendu que les transcodeurs 14 assurent un transcodage HDB3 → NRZ et les autres un transcodage inverse. On peut noter que les transcodeurs $14_A$ et $15_A$ peuvent être éliminés, si les transcodeurs complémentaires sont éliminés dans les terminaux 3 et 4.

Qu'il y est présence de transcodeurs ou non, les éléments binaires émis par le terminal d'émission 3 sont reçus par une mémoire de trame 10.

Cette mémoire de trame 10 permet de conserver un nombre d'éléments binaires qui correspond au contenu d'une trame dans le système selon lequel fonctionne le terminal d'émission 3, soit 256 éléments binaires si l'on fait référence à l'exemple mentionné plus haut. Ceci permet de regrouper les éléments binaires reçus par échantillons et éventuellement de retrouver les échantillons initiaux à partir des informations de verrouillage de trame et de multitrame, si une confusion est possible en amont.

Dans l'agencement de transmission selon l'invention présenté figure 2, la mémoire de trame 10 comporte en fait une mémoire 16 à entrée série et sortie série, suivie par au moins un registre 17 à entrée série et sorties parallèles qui est apte à produire les échantillons successifs.

La mémoire 16 reçoit les éléments binaires émis par le terminal d'émission 3 au rythme de l'horloge de base $H_A$ de l'organe 1 (figure 3a) et ces éléments binaires sont écrits à ce rythme dans l'ordre de leur arrivée. Ces mêmes éléments binaires sont simultanément reçus par un équipement de jonction 18, de type classique chargé de relever sans les extraire les informations de fonctionnement telles que les informations de synchronisation, de verrouillage, d'alarme de taux d'erreur, et par un équipement d'extraction de signalisation 19, de type classique lui aussi, assurant un relèvement identique des informtions de signalisation.

Les informations relevées par les équipements 18 et 19 sont transmises au microcalculateur de gestion 13 et elles permettent notamment la reconstitution de la trame initiale, ainsi qu'évoqué plus haut, afin d'éviter un groupement erroné des éléments binaires reçus en série.

En ce but le microcalculateur de gestion est apte à agir sur un compteur d'adressage en lecture $20_A$ chargé de fournir les adresses successives de lecture des éléments binaires successivement reçus, afin d'effectuer un saut d'adresse correspondant au décalage nécessaire (figure 3b).

Dans l'exemple choisi le compteur d'adressage $20_A$ est relié à l'entrée de lecture R de la mémoire 16 et il assure une lecture élément binaire par élément binaire au rythme des signaux d'horloge de base $H_A$ de l'organe 1 qui sont fournis par un premier circuit $21_1$ d'un distributeur d'horloge 21 étant entendu que ces signaux sont obtenus soit directement de l'organe 1 soit par l'intermédiaire du transcodeur $14_A$ selon un processus habituel, ainsi que l'indique les pointillés.

Les éléments binaires émis par la mémoire 16 au rythme de l'horloge de base $H_A$ sont transmis au registre à décalage 17 qui comporte un nombre de sorties parallèles égales au nombre d'éléments binaires contenus dans un échantillon, soit huit éléments binaires dans l'exemple choisi.

Selon un procédé classique il peut être envisagé d'utiliser plus d'un registre à décalage pour effectuer la conversion série-parallèle en particulier pour augmenter le temps imparti à la lecture du registre, toutefois ceci ne sera pas développé ici, car une telle adaptation est du domaine de l'homme de métier. L'écriture en registre à décalage 17 s'effectue au rythme de l'horloge $H_A$, et l'-effacement des éléments binaires mémorisés s'effectue par l'intermédiaire de l'entrée d'effacement $17_E$ sous le contrôle du distributeur d'horloge 21, si cet effacement s'avère nécessaire.

Ceci se produit notamment en cas de saut d'adresse au niveau du compteur $20_A$ et le déclenchement en est demandé par le microcalculateur de gestion 13.

Les sorties parallèles du registre à décalage 17 sont reliées aux entrées de M registres de transfert 22, tel $22_0$ de manière à pouvoir transmettre successivement à chacun d'eux un échantillon.

Dans l'exemple choisi, il y a M = 32 registres de transfert 21 et chacun d'eux est apte à recevoir simultanément huit éléments

8

binaires provenant du registre à décalage 17, soit au total l'ensemble des éléments binaires correspondant au contenu d'une trame, c'est-à-dire les échantillons de parole et les informations auxiliaires émis par le terminal d'émission.

Chaque registre de transfert 22 comporte donc P entrées parallèles qui sont scindées en deux groupes l'un comportant huit entrées pour les éléments binaires d'un échantillon et l'autre comportant des entrées pour des éléments binaires d'accompagnement au nombre de deux dans l'exemple choisi.

Chaque registre de transfert 22 est muni d'au moins une entrée de contrôle en écriture et d'au moins une entrée de contrôle en lecture qui permettent d'assurer ces opérations à des instants différents. De manière classique des circuits intégrés existants permettent de regrouper plusieurs registres 21 et de les adresser séparément, ceci ne sera pas développé plus avant, car relevant de techniques classiques.

Selon l'invention les données d'accompagnement sont destinées à permettre la reconstitution du format original des informations après transmission via les liaisons à faible débit et à permettre la transmission de données sur au moins un canal en particulier pour les données de signalisation et d'alarme qui doivent pouvoir être échangées entre les transmultiplexeurs pour tout ce qui les concerne.

Dans l'exemple choisi, chaque échantillon de huit éléments binaires est accompagné d'un élément binaire S essentiellement prévu pour la transmission d'informations de synchronisation et d'un élément binaire de transmission de donnée D afin de former un mot de format SD 12345678 destiné à être transmis en série via une liaison 5.

De ce fait le format des mots transmis par les registres 22 est différent de celui des échantillons que reçoit la mémoire de trame 16, bien que la durée de la trame $T_A$ relative aux échantillons parvenant à cette mémoire 16 soit choisie égale à la durée de la trame $T_T$ relative aux mots transmis aux liaisons 5 par les registres 22.

En conséquence, l'horloge de base $H_A$ ne peut être directement utilisée pour la lecture des registres 22 et ceci conduit à prévoir une horloge de lecture $H_E$ qu'il est possible de régler par rapport à $H_A$ selon un processus classique. Le distributeur 21 comporte par exemple un second circuit $21_2$ qui fournit une horloge dite de transmission $H_E$, ce circuit est constitué classiquement par un oscillateur non figuré qui est commandé par une tension obtenue par comparaison des signaux $H_E$ et $H_A$ dont les fréquences sont dans un rapport constant R ; ce rapport R est de 5/128 lorsqu'une trame $T_T$ ne comporte qu'une voie de dix éléments binaires et que trente-deux liaisons 5 sont nécessaires pour remplacer une jonction MIC 32 voies, et de 5/16 lorsqu'une trame $T_T$ comporte 8 voies de dix éléments binaires qui correspondent à l'emploi de quatre liaisons 5 pour remplacer la jonction MIC 32 voies. Dans une variante préférée de réalisation le nombre M de liaisons 5 est choisi égal à huit. L'horloge $H_A$ et l'horloge $H_E$, ainsi produites par le distributeur 21, permettent ainsi d'obtenir selon des manipulations classiques les signaux destinés aux opérations d'écriture et de lecture dans les registres, tant des échantillons que de leurs données d'accompagnement -voir figures 3c et 3d-.

Ces données d'accompagnement sont fournies par l'intermédiaire d'un équipement d'injection 23 qui les reçoit du microcalculateur 13 et qui les transmet sélectivement aux entrées correspondantes des registres 22.

L'équipement d'injection 23 comporte essentiellement des registres non figurés dont les sorties sont sélectivement reliées aux entrées de données d'accompagnement des registres 22 en même temps que le registre 17, ainsi qu'une logique d'écriture et de lecture contrôlées par les horloges $H_E$ et $H_A$.

Les éléments binaires d'accompagnement S, que comportent les mots transmis sur une liaison 5 au cours des trames successives, sont classiquement organisés pour fournir des informations de verrouillage de trame $T_T$ et de multitrame correspondante. Ainsi dans un exemple de réalisation dans lequel chaque liaison 5 ne dessert qu'une voie par trame, les trames sont organisées en multitrames de trente-deux trames comportant chacune un mot de dix éléments binaires, seize des trente-deux éléments binaires S de la multitrame correspondent aux données de verrouillage et les seize autres fournissent un canal sémaphore ayant un débit de 4 Kbit/s en plus du canal à 8 Kbit/s que composent les éléments binaires D.

La lecture des éléments binaires contenus dans chaque registre 22 s'effectue en série au rythme de l'horloge $H_E$, elle est synchrone pour autant de registres 22 qu'il y a de liaisons 5 en service -voir figure 3d-.

Chaque registre 22 a sa sortie reliée à une entrée de l'unité de commutation $12_j$ dont les sorties desservent chacune l'une des liaisons 5.

Dans l'exemple choisi cette unité de commutation $12_j$ est constituée par un agencement classique de multiplexeurs 24 en nombre au moins égal au nombre N de liaisons 5 à desservir, chacun ayant ses entrées alimentées par les registres 22 et sa sortie alimentant une liaison 5.

Ces multiplexeurs 24 sont classiquement activés par le distributeur d'horloge 21 en fonction du nombre de liaisons 5 en service et de l'organisation de trame et de multitrame que cela entraîne -voir figures 3e et 3f-.

En effet, le produit du nombre de liaisons 5 en service par le nombre de mots transmis par une liaison 5 au cours d'une trame $T_T$ doit être égal au nombre d'échantillons reçus par la mémoire 16 au cours d'une trame $T_A$, si l'on veut une transmission à jet continu et une répartition homogène de la charge entre liaisons 5.

Dans le cas, où 32 est le nombre d'échantillons reçus par la mémoire 16 au cours d'une trame, il y a donc plusieurs combinaisons allant de 32 liaisons 5 utilisant une trame $T_{T1}$ ne comportant qu'un mot de dix éléments binaires à quatre liaisons 5 utilisant une trame $T_{T8}$ au cours de laquelle huit mots de dix éléments binaires sont transmis.

Ceci conduit à différents adressages des registres 22 et donc à différents marquages des multiplexeurs 24, l'ensemble de ces opérations étant assuré par le distributeur d'horloge 21 à partir des signaux d'horloge $H_E$ et des ordres du microcalculateur de gestion 13. Ainsi, dans le cas où quatre liaisons 5 sont simultanément en service, quatre des trente-deux registres 22 sont simultanément activés au rythme de l'horloge $H_E$ pendant chaque huitième de trame $T_T$ et chacun de ces quatre registres 22 a sa sortie série reliée au transcodeur 15 d'une liaison 5 distincte par l'un des multiplexeurs 24 -diagramme figure 3f-.

Bien entendu ces opérations sont effectuées classiquement par mise en oeuvre de composants usuels et ne nécessitent donc pas d'explication supplémentaire.

Lorsque le canal de données D est utilisé, le transmultiplexeur d'émission comporte une interface de transmission 25 connectée à une sortie de données de l'organe 1 et essentiellement constituée de registres-tampon 26. Les registres 26 sont reliés à la liaison bus d'entrée-sortie du microcalculateur 13 qui se charge d'assurer le transfert à l'équipement 23 des données reçues par l'intermédiaire de l'interface de transmission 25 à destination des canaux D des différentes liaisons 5.

L'ensemble des informations transmises par les liaisons 5 est transmis aux transcodeurs 14, tels $14_0$ à $14_{N-1}$ du transmultiplexeur de réception 7. Les éléments binaires simultanément émis sur les liaisons 5 en service parviennent à des instants différents en raison de la dispersion des caractéristiques des liaisons 5 et doivent être repositionnés pour permettre une reconstitution des informations initiales.

En ce but, le transmultiplexeur de réception 7 comporte un dispositif de repositionnement des bits entrants qui est relié en sortie des transcodeurs $14_0$ à $14_{N-1}$. Ce dispositif comporte autant d'unités de mise en phase des bits entrants 27 qu'il y a de liaisons 5 et donc de transcodeurs 14 associés à ces liaisons 5.

Les unités de mise en phase 27 sont destinées à mettre en phase, à chaque instant I, les éléments binaires reçus des liaisons 5 en service au cours de cet instant I dont la durée est égale à la période de l'horloge $H_E$ -voir figure 4-.

Chaque unité 27 comporte classiquement une base de temps primaire 28 reliée à la sortie de signaux d'horloge du transcodeur 14 auquel l'unité 27 est associée, cette base de temps primaire 28 forme les signaux nécessaires à la lecture des données binaires reçues du transcodeur. Les signaux fournis par chaque base de temps primaire 28 sont appliqués d'une part à une logique de mise en phase 29 commune aux différentes unités 27 et à un organe de mise en phase 30 propre à l'unité 27 considérée, telle $30_0$ pour $27_0$.

La logique de mise en phase 29 et les organes de mise en phase 30 sont du type classique de ceux qui sont mis en oeuvre pour les extrémités de réception des liaisons bus multilignes.

La logique de mise en phase 29 produit un signal d'horloge qui rythme la sortie des éléments binaires en sortie des organes de mise en phase 30, dans l'exemple de réalisation choisi, ce signal est celui qui est obtenu de la liaison la plus retardante, tant que le fonctionnement de cette liaison est normal.

Des unités de recadrage 31 sont destinées à retourner le positionnement que les éléments binaires reçus avaient avant leur transmission, ceci est obtenu par décalage éventuel de ces éléments selon un pas égal à la période d'horloge d'émission ou à un multiple de cette période -voir figure 4-.

En ce but chaque unité 31 est composée d'une mémoire de recadrage 32, d'un détecteur de code de verrouillage 33 et d'un compteur d'adressage en lecture 20 et l'ensemble des unités est contrôlé par une logique de recadrage.

Chaque mémoire de recadrage 32 est reliée à la sortie de donnée de l'organe de mise en phase 30 auquel elle est associée, elle est prévue pour mettre en mémoire un nombre d'éléments binaires égal au nombre d'éléments binaires d'une trame $T_T$ augmenté du nombre d'éléments binaires susceptibles d'être contenus dans le temps correspondant au retard maximum possible entre liaisons 5.

L'écriture en mémoire de recadrage 32 s'effectue au rythme du signal d'horloge fourni par la logique de mise en phase 29 aux organes de mise en phase 30.

Dans l'exemple choisi, le recadrage des éléments binaires provenant des liaisons 5, s'effectue par modification des positionnements respectifs des adresses de départ de lecture dans les différentes mémoires 32. Ceci est classiquement obtenu par un prépositionnement des compteurs 20, tel $20_0$, qui assurent l'adressage en lecture. Ce prépositionnement est déterminé par le calculateur de gestion 13 du transmultiplexeur de réception.

Bien entendu, ce calculateur de gestion 13 peut être unique pour le transmultiplexeur d'émission et le transmultiplexeur de réception affectés à un même organe, ainsi que présenté figure 3.

Le calculateur de gestion 13 d'un transmultiplexeur de réception reçoit les informations d'horloge provenant de la logique de mise en phase 29 et des informations sur les positions relatives dans le temps des données de verrouillage de trame et de multitrame en provenance des liaisons 5 via une logique de recadrage 34 et les détecteurs de code de verrouillage 33 qui assurent l'extraction de ces données pour chaque liaison 5.

Un détecteur 33 est placé en sortie de chaque unité de mise en phase 27 en parallèle avec la mémoire 32 que dessert cette unité 27. Chacun de ces détecteurs 33, de type classique, est apte à détecter puis à vérifier l'apparition des codes de verrouillage de trame et de multitrame et à le signaler à la logique de recadrage 34 qui sert d'interface entre le calculateur 13 et d'une part les détecteurs 33 pour l'envoi d'informations et d'autre part les compteurs $20_0$ à $20_{N-1}$ afin de les prépositionner.

Les éléments binaires contenus dans chaque mémoire 32 sont lus sous le contrôle d'un compteur 20 qui est prépositionné comme prévu ci-dessus et qui est activé au rythme des signaux d'horloge fournis par la logique de mise en phase 29, de manière que toutes les mémoires 32 fournissent au même instant des éléments binaires ayant même rang dans les multitrames de transmission qui les transmettent.

Une base de temps générale 35 alimentée par les signaux d'horloge provenant de la logique de mise en phase 29 et contrôlée par le calculateur de gestion 13 assure la reconstitution du message original tel que reçu de l'organe 1. En ce but la base de temps générale 32 contrôle des mémoires-tampon 36 placées en sortie de chacune des mémoires 32 pour assurer une conversion série-parallèle.

Chaque mémoire-tampon 36 est alimentée, élément binaire par élément binaire, par la mémoire 32 qu'elle dessert et ce au rythme de lecture de celle-ci et elle assure une mémorisation temporaire de ces éléments binaires aux fins de transmission en parallèle d'une part de l'échantillon et de l'autre des informations auxilaires qui l'accompagnent.

Ainsi dans l'exemple de réalisation envisagé, chaque mémoire-tampon 36 comporte une entrée série et dix sorties parallèles

14

scindées en un groupe de deux sorties pour les deux éléments binaires d'information auxiliaire et un groupe de huit sorties pour les huit éléments binaires d'échantillon.

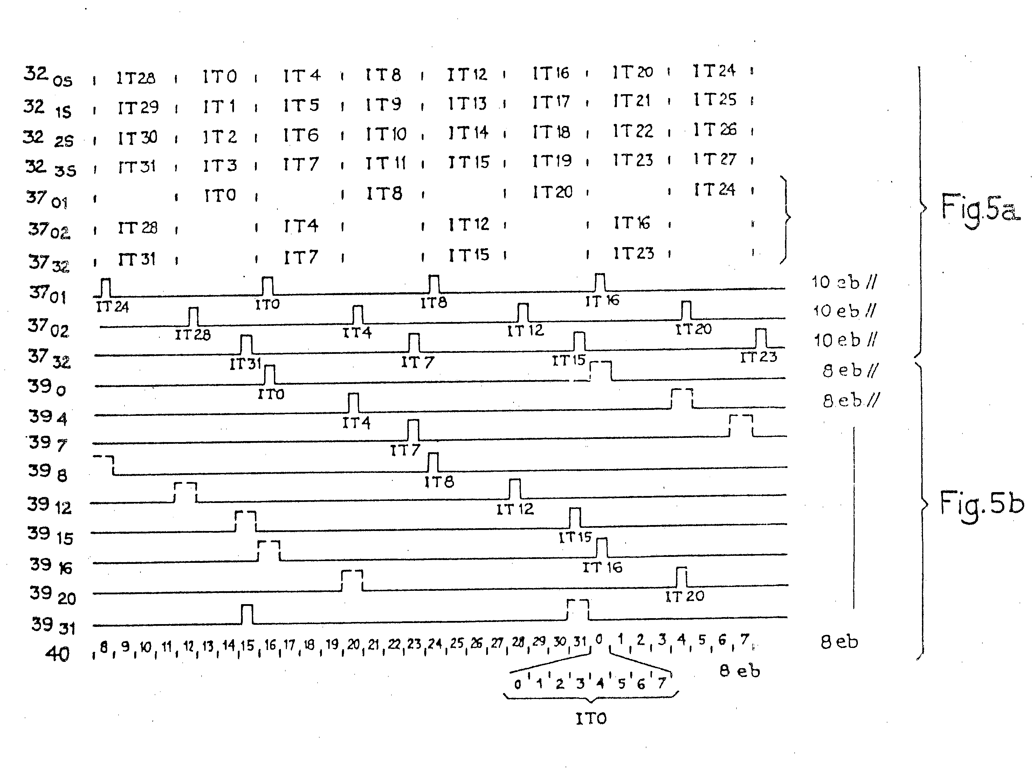

Dans un exemple préféré de réalisation, chaque mémoire-tampon 36 est composée de deux registres 37 série-parallèle qui ont leurs sorties de même rang communes et qui sont aptes à mémoriser chacune un mot de manière à éviter des opérations simultanées de lecture et d'écriture d'un même registre au cours d'un même intervalle de temps de transmission -voir figure 5a-.

Les deux sorties d'information auxiliaire sont reliées à une mémoire d'informations auxiliaires 38 à laquelle le calculateur de gestion 13 a accès afin d'être apte à récupérer et/ou utiliser ces informations.

Les huit sorties d'échantillon de chaque mémoire-tampon 36 sont reliées à autant d'entrées parallèles d'une unité de commutation $12_2$ dont les sorties sont reliées aux M registres parllèles-série 39 d'une mémoire de trame $10_2$.

A chaque intervalle de temps de transmission défini par la base de temps générale 35, chaque mémoire 36 -ou préférablement un des deux registres 37 de chaque mémoire 36- est mis en liaison via l'unité de commutation $12_2$ avec l'un des M registres parallèles-série 39 à qui sont transmis huit éléments binaires d'un échantillon, M étant égal à 32 dans l'exemple choisi -voir figure 5b-.

L'unité de commutation $12_2$ est d'une constitution identique à l'unité de commutation $12_1$, elle est organisée de manière à posséder N entrées et M sorties à huit bornes chacune. La commande de cette unité s'effectue classiquement à un rythme fixé par la base de temps générale 35 qui fixe le déroulement des mises en liaison selon une organisation éventuellement modifiable par le calculateur de gestion 13.

Les M échantillons mis en mémoire dans les registres 39 au cours d'une trame de transmission sont ensuite recombinés pour reformer la trame MIC originale qui a même durée que la trame de transmission.

En ce but chacun des M registres 39 est successivement lu au rythme de signaux d'horloge $H_L$ qui proviennent de la base de temps

15

générale 35.

Ces signaux d'horloge $H_L$ proviennent de la base de temps générale 35 lorsque le transmultiplexeur de réception dessert un organe
esclave sans horloge propre. Ils sont alors obtenus à partir des
signaux produits par la logique de mise en phase 29 qui alimentent
un oscillateur contrôlé en tension de fréquence nominale égale à la
fréquence MIC de référence, soit 2048 Kbit/s dans l'exemple choisi.
Cet oscillateur étant classiquement muni d'une boucle de réaction
et étant esclave par rapport à l'horloge de l'organe 1.

Les signaux d'horloge fournis par la base de temps générale 35
sont ceux de l'horloge de l'organe desservi lorsque cet organe possède son horloge propre, ce qui est le cas si cet organe est maître
ou s'il ne dépend pas de l'organe émetteur pour son fonctionnement.

Dans tous les cas les M registres 39 sont lus successivement
élément binaire par élément binaire pour reconstituer le message MIC
initial qui est transmis à un terminal de réception 4 via un multiplexeur 40.

De même que pour le transmultiplexeur d'émission, une interface
41 assure la transmission des données éventuellement reçues via les
canaux de données S et D. Les données à transmettre sont éparées
des informations de synchronisation et de signalisation au niveau
de la mémoire 38, puis sont transmises à l'interface 41 via les
liaisons BUS du microcalculateur 13.

Les informations de synchronisation et de signalisation reçues
via la mémoire d'informations auxiliaires 38 sont analysées par le
microcalculateur 13 qui assure éventuellement l'injection d'informations dans la trame MIC reproduite, par exemple d'une information
d'alarme, par l'intermédiaire d'un circuit d'injection 42 rythmé par
la base de temps générale 35 et commandé par le microcalculateur 13.
Le processus d'injection est de type classique et ne sera donc pas
décrit plus avant, pas plus que le circuit classique d'injection 42
qui alimente directement sur les registres 39.

REVENDICATIONS

1. Agencement de transmission numérique destiné à mettre en liaison deux organes à fort débit de données par l'intermédiaire de liaisons filaires ayant un débit unitaire plus faible que le débit à transmettre, lorsque ces données sont fournies sous forme de signaux impulsionnels codés qui sont multiplexés dans le temps, cet agencement étant caractérisé en ce qu'il comporte pour chaque sens de transmission exploité au moins :

- un transmultiplexeur d'émission, par organe producteur de données, connecté en sortie du terminal d'émission à grand débit de cet organe et apte à modifier le multiplexage de rang M des signaux, émis par ce terminal d'émission à destination d'une liaison unique, pour les répartir sur N liaisons à plus faible débit, sachant que M et N sont des nombres entiers tels que $1 < N < M$ ;

- un transmultiplexeur de réception, inséré entre les N liaisons et le terminal de réception à grand débit d'un organe récepteur de données, apte à reconstituer au profit de ce terminal d'émission les signaux originaux ayant un multiplexage de rang M, à partir des signaux multiplexés reçus des N liaisons.

2. Agencement de transmission numérique pour terminaux MIC, selon la revendication 1, caractérisé en ce qu'un transmultiplexeur d'émission comporte essentiellement :

- un microcalculateur de gestion ;

- une mémoire de trame, reliée à la sortie à fort débit de données du terminal d'émission à desservir, apte à mémoriser les échantillons d'une trame de signaux MIC ayant un multiplexage de rang M ;

- un ensemble de saisie et d'injection d'informations auxiliaires, connecté à la sortie à fort débit de données du terminal d'émission à desservir de même que la mémoire de trame, et relié au microcalculateur de gestion ;

- un ensemble de M registres-tampon, connectés en parallèle en sortie de la mémoire de trame d'une part et de l'ensemble de saisie et d'injection d'informations auxiliaires d'autre part, aptes à mémoriser chacun les P éléments binaires d'un mot constitué par mise en série des éléments binaires d'un échantillon émanant de la mémoire de trame et de ceux d'une information auxiliaire ;

17

- une unité de commutation à M entrées et N sorties dont les entrées sont reliées aux sorties des registres-tampons et dont les sorties sont reliées aux liaisons ;

- un distributeur d'horloge, alimenté par les signaux d'horloge de l'organe producteur de données et contrôlé par le microcalculateur de gestion pour produire les divers signaux de commande destinés à la mémoire de trame, à l'ensemble de saisie et d'injection, à l'ensemble des M registres-tampons et à l'unité de commutation.

3. Agencement de transmission numérique pour terminaux MIC, selon les revendications 1 et 2, caractérisé en ce qu'un transmultiplexeur de réception comporte essentiellement :

- un microcalculateur de gestion ;

- un dispositif de repositionnement des éléments binaires transmis par les liaisons, connecté en sortie de ces liaisons ;

- un exemple de N mémoires-tampons, connectées aux sorties du dispositif de repositionnement et aptes à mémoriser chacune au moins un mot en provenance d'une liaison à laquelle cette mémoire-tampon est affectée ;

- une unité de commutation à N entrées et M sorties dont les entrées sont reliées aux sorties des N mémoires-tampons ;

- un ensemble de M registres connectés aux M sorties de l'unité de commutation à N entrées et M sorties, aptes à mémoriser chacun les éléments binaires d'un échantillon ;

- un multiplexeur relié par ses entrées de données aux sorties des M registres du transmultiplexeur de réception et par sa sortie à l'entrée à fort débit de données du terminal de réception à desservir ;

- une base de temps générale, alimentée par les signaux d'horloge fournis par le dispositif de repositionnement et contrôlée par le microcalculateur de gestion pour produire les divers signaux de commande destinés à l'ensemble de remise en phase et de recadrage lui-même, à l'ensemble de N mémoires-tampons, à l'unité de commutation à N entrées et M sorties, à l'ensemble de M registres et au multiplexeur du transmultiplexeur de réception.

4. Agencement de transmission numérique selon la revendication 2, caractérisé en ce que l'ensemble de saisie et d'injection d'informations auxiliaires d'un transmultiplexeur d'émission comporte :

– un équipement de jonction, relié d'une part à la sortie à fort débit de données du terminal d'émission à desservir et d'autre part
aux liaisons bus du microcalculateur de gestion, pour relever les
informations auxiliaires de fonctionnement contenues dans les signaux transmis par ce terminal d'émission ;

– un équipement d'extraction de signalisation, relié d'une part à la
sortie à fort débit de données du terminal d'émission à desservir
et d'autre part aux liaisons bus du microcalculateur de gestion,
pour relever les informations de signalisation contenues dans les
signaux transmis par ce terminal d'émission ;

– un équipement d'injection relié aux liaisons bus du microcalculateur de gestion et aux entrées d'informations auxiliaires des M
registres-tampons, apte à produire et à transmettre ces informations auxiliaires à l'instigation du microcalculateur de gestion
pour chaque registre-tampon.

5. Agencement de transmission numérique selon la revendication
2, caractérisé en ce que la mémoire de trame d'un transmultiplexeur
d'émission comporte :

– une mémoire à entrée série reliée à la sortie à fort débit de
données du terminal d'émission à desservir, apte à mémoriser les
éléments binaires composant les échantillons d'une trame de signaux MIC et à les transmettre au rythme de l'horloge de l'organe
producteur avec un décalage modifiable ;

– un registre à décalage dont l'entrée série est reliée à la sortie
de la mémoire ci-dessus, apte à mémoriser au moins un échantillon
et à transmettre en parallèle par ses sorties les éléments binaires d'un tel échantillon.

6. Agencement de transmission numérique selon les revendications 1 et 2, caractérisé en ce que le distributeur d'horloge d'un
transmultiplexeur d'émission comporte :

– un premier circuit d'horloge, alimenté par les signaux de l'horloge de base de l'organe producteur de données, apte à produire des
signaux dont les fréquences sont égales ou sous-multiples de la
fréquence de cette horloge de base pour commander la mémoire de trame sous contrôle du microcalculateur de gestion de ce transmultiplexeur d'émission ;

- un second circuit de l'horloge, apte à dériver un signal d'horloge
de transmission des signaux d'horloge de base reçus et à produire
des signaux dont les fréquences sont multiples de ce signal d'horloge de transmission pour commander les M registres tampons et
l'unité de commutation de ce transmultiplexeur d'émission.

7. Agencement de transmission numérique selon la revendication
6 dans lequel la trame des signaux émis par un terminal d'émission
et rythmée par l'horloge de base à même durée que les trames des
signaux transmis par chaque liaison et rythmées par l'horloge de
transmission et en ce que le nombre d'intervalles de temps de voie
contenus dans une trame émise par le terminal d'émission est égal au
nombre d'intervalles de temps de voie contenus dans les N trames respectivement transmises par les N liaisons au cours de la même période
de temps.

8. Agencement de transmission numérique selon la revendication
3, caractérisé en ce que le dispositif de repositionnement d'un
transmultiplexeur de réception comporte :

- un ensemble de N unités de mise en phase reliées chacune à une des
N liaisons et composées chacune d'une base de temps primaire aptes
à produire les signaux d'horloge de lecture relatifs aux signaux
reçus via la liaison desservie, et d'un organe de mise en phase
des éléments binaires reçus via cette liaison, pour assurer la
mise en phase N par N des éléments binaires quasi simultanément
reçus via les N liaisons desservies ;

- une logique de mise en phase, reliée aux sorties d'horloge de lecture des N unités de mise en phase et aux entrées de commande des
organes de mise en phase de ces mêmes unités, apte à fournir un
signal d'horloge commun ;

- un ensemble de N unités de recadrage reliées chacune à une des N
unités de mise en phase et composées chacune d'une mémoire de recadrage et d'un détecteur de verrouillage alimenté par l'unité de
mise en phase associée, ainsi que d'un compteur d'adressage en
lecture pour la mémoire de recadrage ;

- une logique de recadrage, alimentée par les détecteurs de verrouillage, contrôlée par le microcalculateur de gestion et reliée aux entrées de décalage des compteurs.

9. Agencement de transmission numérique, selon les revendications 7 et 8, caractérisé en ce qu'un transmultiplexeur de réception
comporte :

- N mémoires de recadrage ayant chacune leur entrée reliée à une
liaison via une unité de mise en phase et possèdant une capacité
en éléments binaires qui est au moins égale au nombre d'éléments
binaires de la trame utilisée sur la liaison augmentée du nombre
d'éléments binaires correspondant à l'intervalle de dispersion
maximal des N liaisons ;

- N mémoires-tampons ayant chacune leur entrée reliée à l'une des
mémoires de recadrage et possèdant chacune d'une part une capacité
en éléments qui est au moins égale au nombre d'éléments binaires
d'un mot de transmission tel que transmis sur les N liaisons et
d'autre part des sorties parallèles ;

- M registres parallèles-série aptes à mémoriser chacun les éléments
binaires d'un échantillon et comportant donc autant d'entrée qu'il
y a d'éléments binaires par échantillon, ces entrées étant aptes à
être connectée aux sorties correspondantes des mémoires-tampons,
via l'unité de commutation du transmultiplexeur de réception.

10. Agencement de transmission numérique selon les revendications 2 et 3 pour établissement de communications duplex entre
deux organes, caractérisé en ce qu'il comporte un microcalculateur
de gestion unique pour le transmultiplexeur d'émission et le transmultiplexeur de réception affectés à un même organe.

11. Agencement de transmission numérique selon la revendication 3 comportant au moins un transmultiplexeur de réception desservant un organe récepteur possesseur d'une horloge propre, caractérisé en ce que la base de temps générale de ce transmultiplexeur est
reliée à l'horloge propre de l'organe récepteur pour la commande de
lecture des N mémoires-tampons, d'écriture et de lecture des N
registres parallèle-série et les commandes de l'unité de commutation
et du multiplexeur.

Fig.1

Fig 2

2/5

0016677

BAD ORIGINAL

Fig. 3a Fig. 3b Fig. 3c Fig. 3d Fig. 3e Fig. 3f

$14_{os}$

$14_{15}$

$14_{35}$

$30_{os}$

$30_{15}$

$30_{35}$

$32_{os}$

$32_{15}$

$32_{35}$

Fig. 4

32 05 | IT28 | IT0 | IT4 | IT8 | IT12 | IT16 | IT20 | IT24 |
32 1S | IT29 | IT1 | IT5 | IT9 | IT13 | IT17 | IT21 | IT25 |
32 2S | IT30 | IT2 | IT6 | IT10 | IT14 | IT18 | IT22 | IT26 |
32 3S | IT31 | IT3 | IT7 | IT11 | IT15 | IT19 | IT23 | IT27 |
37 01 | | IT0 | | IT8 | | IT20 | | IT24 |
37 02 | IT28 | | IT4 | | IT12 | | IT16 | |
37 32 | IT31 | | IT7 | | IT15 | | IT23 | |

Fig.5a

37 01 — IT24 ... IT0 ... IT8 ... IT16 — 10 eb //
37 02 — IT28 ... IT4 ... IT12 ... IT20 — 10 eb //
37 32 — IT31 ... IT7 ... IT15 ... IT23 — 10 eb //
39 0 — IT0 — 8 eb //
39 4 — IT4 — 8 eb //
39 7 — IT7
39 8 — IT8
39 12 — IT12
39 15 — IT15
39 16 — IT16
39 20 — IT20
39 31
40 — 8,9,10,11,12,13,14,15,16,17,18,19,20,21,22,23,24,25,26,27,28,29,30,31,0,1,2,3,4,5,6,7 — 8 eb

8 eb

0,1,2,3,4,5,6,7

IT0

Fig.5b

**Office européen des brevets**

**RAPPORT DE RECHERCHE EUROPEENNE**

Numéro de la demande

EP 80 40 0298

## DOCUMENTS CONSIDERES COMME PERTINENTS

| Catégorie | Citation du document avec indication, en cas de besoin, des parties pertinentes | Revendication concernée |
|---|---|---|
| | <u>US - A - 3 435 148</u> (YOSHINE)<br><br> * Colonne 1, lignes 55-65; colonne 6, ligne 28 - colonne 7, ligne 17, lignes 41-48 *<br><br> -- | 1,2 |
| | DEUXIEME COLLOQUE INTERNATIONAL SUR LES TELECOMMUNICATIONS NUMERIQUES PAR SATELLITE, novembre 1972, pages 104-112<br>Paris, FR.<br>FRANCOIS: "Utilisation d'organes de voie SPADE dans un réseau SPADE à affectation de voies prédéterminées"<br><br> * Page 105, dernière ligne - page 106, ligne 13, lignes 19-22; page 107, lignes 8-15; lignes 20-24 *<br><br> ---- | 1,2,4 |

**CLASSEMENT DE LA DEMANDE (Int. Cl. )**

H 04 J 3/00

**DOMAINES TECHNIQUES RECHERCHES (Int. Cl. )**

H 04 L 25/14
H 04 J 3/16
3/00
H 04 L 5/24

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 09-06-1980 | HOLPER |

OEB Form 1503.1  06.78